**Europäisches Patentamt**

**European Patent Office**

**Office européen des brevets**

(11) Publication number: **0 187 670**
**A2**

## (12) EUROPEAN PATENT APPLICATION

(21) Application number: **86100211.1**

(51) Int. Cl.⁴: **B 01 J 20/34**

(22) Date of filing: **09.01.86**

(30) Priority: **11.01.85 JP 3488/85**

(43) Date of publication of application:
**16.07.86 Bulletin 86/29**

(84) Designated Contracting States:
**BE DE FR GB IT NL SE**

(71) Applicant: **KANEGAFUCHI KAGAKU KOGYO KABUSHIKI KAISHA**
**2-4 Nakanoshima 3-chome**
**Kita-ku Osaka-shi Osaka-fu(JP)**

(72) Inventor: **Tani, Nobutaka**
**11-1-105, Senbanishi 2-chome**
**Minoo-shi Osaka-fu(JP)**

(72) Inventor: **Hayashi, Tsuneo**
**Nishiyama-cho 3-1**
**Ashiya-shi Hyogo-ken(JP)**

(74) Representative: **Türk, Dietmar, Dr. rer. nat. et al,**
**Patentanwälte Türk & Gille Brucknerstrasse 20**
**D-4000 Düsseldorf 13(DE)**

(54) Process for recovering adsorbent for use in extracorporeal circulation treatment.

(57) A process for recovering the adsorption capacity of the adsorbent for use in extracorporeal circulation treatment, wherein polyanion compound is immobilized on a water-insoluble support, characterized by that the adsorbent after adsorption is washed with an aqueous electrolytic solution with a concentration of 0.18 to 6 mole/$l$. According to the process of the present invention, the adsorbent after adsorption can be recovered quickly and simply with sufficient safety and the recovered adsorbent for use in extracorporeal circulation treatment has almost unchanged selectively and saturated amount of adsorption, which also lower the cost of treatment

EP 0 187 670 A2

PROCESS FOR RECOVERING ADSORBENT FOR USE IN
EXTRACORPOREAL CIRCULATION TREATMENT

The present invention relates to a process for recovering an adsorption capacity of an adsorbent for use in extracorporeal circulation treatment. More particularly, the present invention relates to a process for recovering an adsorption capacity of an adsorbent, wherein polyanion compound is immobilized on a water-insoluble support, for use in extracorporeal circulation treatment.

Hitherto, the adsorbent, wherein polyanion compound is immobilized on a water-insoluble support, has been used for the purpose of removing lipoproteins, especially low density lipoproteins (hereinafter referred to as "LDL") and very low density lipoproteins (hereinafter referred to as "VLDL"), from body fluids such as blood, plasma and serum by adsorbing such lipoproteins in extracorporeal circulation treatment. After treatment, the adsorbent used has been dumped.

When it is required to increase the removing capacity of the adsorbent, an amount of the adsorbent should be increased since the removing capacity of the adsorbent, i.e. saturated amount of adsorption, is proportional to the volume of the adsorbent. However, the increased amount of the adsorbent results in an increase of extracorporeal circulation volume, which would be a burden of the patient. Further, the volume of the extracorporeal circulation is limited to some extent and consequently the removing capacity of the adsorbent is also limited. In addition to the above-mentioned problems, there also exist another problem such as cost of treatment when using the increased amount of the adsorbent for use in extracorporeal circulation treatment.

The problems as mentioned above will be solved by recovering the adsorption capacity of the adsorbent after adsorption of lipoproteins in order to use the adsorbent again. However, a safe and simple process for recovering the adsorption capacity of the adsorbent has not yet been developed.

In accordance with the present invention, there is provided a process for recovering the adsorption capacity of the adsorbent for use in extracorporeal circulation treatment, wherein polyanion compound is immobilized on a water-insoluble support, by washing the adsorbent after completion of the adsorption with 0.18 to 6 mole/$\ell$ of an aqueous electrolytic solution to recover the removing capacity through elimination of the adsorbed lipoproteins.

In the first place, the adsorbent for use in extracorporeal circulation treatment employed in the present invention, wherein polyanion compound is immobilized on a water-insoluble support, is explained.

Nonexclusive examples of the polyanion compound employed for producing the adsorbent used in the present invention are for instance, sulfated monosaccharide and polysaccharide such as heparin, dextran sulfate, chondroitin sulfate chondroitin polysulfate, heparan sulfate, keratansulfate, heparitin sulfate, xylan sulfate, charonin sulfate, cellulose sulfate, chitin sulfate, chitosan sulfate, pectin sulfate, inulin sulfate, argine sulfate, glycogen sulfate, polylactose sulfate, carrageenan sulfate, starch sulfate, glucose sulfate, polyglucose sulfate, laminarin sulfate, galactan sulfate, levan sulfate and mepesulfate; phosphorous-welframic acid, polysulfated anethole, polyvinyl alcohol sulfate, polyphosphated sugar, and the like.

Nonexclusive examples of the water-insoluble support used in the present invention are, for instance, soft gel such as agarose, dextran and polyacrylamide; inorganic porous materials such as porous glass and porous silica gel; and polymeric hard gel formed by synthetic high molecular weight compound or cellulose.

As already described in Japanese Unexamined Patnet Publication No. 212379/1983 by the present inventors, the polymeric hard gel is the most suitable for the water-insoluble support employed for producing the adsorbent for use in extracorporeal circulation treatment.

The polyaninon compound is immobilized on the water-insoluble support by any of physical adsorption, ionic bonding, covalent bonding, and the like, preferably by covalent bonding, in which the release of the immobilized polyanion compound most hardly occures.

The thus produced adsorbent is introduced into the container having an inlet and an outlet for the body fluid, both the inlet and the outlet being equipped with filter to avoid an outflow of the adsorbent, sterilized, and then subjected to extracorporeal circulation treatment.

The adsorbent which adsorbed LDL, VLDL and the like is washed after extracorporeal circulation treatment with 0.18 to 6 mole/$\ell$, preferably 0.3 to 2 mole/$\ell$ of an aqueous electrolytic solution to release the adsorbed LDL, VLDL and the like, which recovers the capacity of the adsorbent for adsorbing LDL, VLDL and the like.

Nonexclusive examples of electrolyte employed in the present invention are, for instance, chlorides such as sodium chloride, calcium chloride, potassium chloride, carbonates such as sodium carbonate and potassium carbonate, phosphates such as sodium hydrogenphosphate and sodium dihydrogenphosphate, and the like.

The electrolytes can be used solely or in combination therewith. Preferably, the employed electrolyte is such that does not show a detrimental effect to the human body in case of the electrolyte remaining in the adsorbent. Also preferably, the employed electrolyte is such that a prescribed aqueous solution of the electrolyte can provide pH range of 5 to 9 in order not to alter the pH value of the body fluid circulating in the adsorbent.

It is preferred to use 0.3 to 2 mole/ℓ of an aqueous electrolytic solution to obtain optimum recovering capacity and easier washing. Concentration of less than 0.18 mole/ℓ of the aqueous electrolytic solution has poor capacity for releasing the adsorbed LDL, VLDL and the like, while not less than 6 mole/ℓ of the solution requires washing of the adsorbent with a large amount of physiological saline and the like in order to reduce a concentration of the remaining electrolyte after recovering process to the physiological level.

Though an amount of the aqueous electrolytic solution for use in recovering can not be sweepingly determined depending on a type of the electrolyte employed, concentration of the solution, recovering process and the like, an amount of around 0.1 to around 20 times as large as that of the adsorbent by volume is usually employed. If the aqueous electrolytic solution is let flow through the column in which the adsorbent is filled, a relatively small amount of the solution, for instance, an amount of around 0.1 to around 2 times as large as that of the adsorbent is enough to carry out the recovering process.

This method also enables to reduce a loss of the body fluid by, after adsorption and before the recovering process, washing out the body fluid remaining in the column with physiological saline and the like.

The recovering process can also be carried by another method such as the so-called batch process, wherein only the adsorbent is placed in the aqueous electrolytic solution and the mixture is then stirred to such degree that the adsorbent is not damaged.

Recovering of the adsorbent is usually carried out at a temperature ranging from around 10 to around 40°C, which is the same condition as in preserving and employing the adsorbent, or it may be carried out at around 40 to around 60°C for the purpose of raising a recovering rate, or the like.

Since the aqueous electrolytic solution employed for the recovering process has higher ionic strength and osmotic pressure values than the physiological level, the adsorbent is preferably washed, after recovering with the aqueous electrolytic solution, with physiological saline and the like to adjust the above-mentioned values to the physiological level for safety.

Though recovering of the adsorbent may be conducted after completion of extracorporeal circulation treatment, two adsorbent columns incorporated into the extracorporeal circulation may also be employed so that the adsorbing and the recovering processes are alernatively carried out by one of the two adsorbent columns since the recovering process can be done in a rapid, simple and sterilized way.

According to the process of the present invention, the adsorbent after adsorption can be recovered quickly and simply with sufficient safety and the recovered adsorbent for use in extracorporeal circulation treatment has almost unchanged selectivity and adsorption capacity, which also lower the cost of treatment.

The present invention is more particularly explained by the following Reference Examples and Examples. However, it should be understood that the present invention is not limited to the Reference Examples and Examples and various changes and modifications can be made without departing from the scope and spirit of the present invention.

Reference Example 1

To 10 ml of cross-linked polyacrylate gel (Toyopearl HW 75 made by Toyo Soda Manufacturing Co., Ltd., exclusion limit of proteins: $5 \times 10^7$, particle size: 50 to 100 μm), which was a hard gel having pores at any part thereof, were added 6 ml of a saturated NaOH solution and 15 ml of epichlorohydrin and the mixture was reacted at 50°C for 2 hours while stirring to give epoxidated gel, to which 20mℓ of concentrated ammonia solution was added and the resultant was stirred at 50°C for 2 hours to introduce amino group.

5 ml of the obtained gel in which amino group is introduced was added to a solution formed by dissolving 300 mg of heparin into 15 mℓ of water and adjusting the pH value to 4.5. To the mixture was added 300 mg of 1-ethyl-3-(dimethylaminopropyl)-carbodiimide maintained at pH value of 4.5, which was shaked at 4°C for 24 hours. After completion of the reaction, washing was conducted successively with 2M saline solution, 0.5 M saline solution and water to give a gel with immobilized heparin.

Reference Example 2

To 10 mℓ of porous cellulose gel (CK Gel A-3 made by Chisso Corporation, exclusion limit: 5 x $10^7$, particle size: 45 to 105 µm) were added 4 g of 20 % aqueous NaOH solution, 12 g of heptan and one drop of nonionic surfactant TWEEN 20. The mixture was stirred at 40°C for 2 hours and 5 g of epichlorohydrin was added. The resultant was stirred for 2 hours and the gel was washed with water and filtered to give epoxidated cellulose gel. ·The amount of the introduced epoxy group was 30 µ M per 1 mℓ of column volume.

To 5 mℓ of the obtained gel were added 5 mℓ of water and 3 g of sodium dextran sulfate having 0.027 dℓ/g of limiting viscosity number and 17.7 % of sulfur content and the mixture was adjusted to pH value of 9 and shaked at 45°C for 16 hours. Then the gel was filtered and washed successively with 2M saline solution, 0.5 M saline solution and water to give a cellulose gel with immobilized sodium dextran sulfuric acid.

Example 1

After each 1 mℓ of the adsorbent obtained in Reference Example 1 was filled in five polypropylene columns and wased with Ringer's solution, 10mℓ of plasma taken from the patient suffering from hyperlipidemia was passed through the column to saturate the adsorbent with LDL and VLDL. One milliliter of Ringer's solution was then passed through the column to wash out the remaining plasma.

An amount of the adsorbed LDL and VLDL was determined from the difference between a cholesterol concentration in the plasma measured before passing through the column and that measured after passing, based on the fact that almost all cholesterol in plasma of the hyperlipidemia patient is derived from LDL and VLDL.

Then 0.15 mole/ℓ, 0.35 mole/ℓ, 0.5 mole/ℓ, 2 mole/ℓ and 4 mle/ℓ of an aqueous solution of sodium chloride were passed through each clumn after adsorption and the columns were washed successively with 10 mℓ of physiological saline and 10 mℓ of Ringer's solution. The same procedures as above were repeated and saturated amounts of adsorption of LDL and VLDL for each column were determined. The results were shown in Table 1, in which saturated amounts of adsorption of cholesterol were given in place of those of LDL and VLDL.

Table 1

| Solution for recovering (aqueous NaCl solution) (mole/ℓ) | Saturated amount of adsorption of cholesterol per 1 mℓ of gel (mg) | |
| --- | --- | --- |
| | Before recovering | After recovering |
| 0.15 | 10.2 | 1.5 |
| 0.35 | 10.5 | 9.5 |
| 0.5 | 10.3 | 10.1 |
| 2.0 | 10.0 | 9.8 |
| 4.0 | 10.1 | 9.9 |

Example 2

The procedures in Example 1 were repeated except that the adsorbent obtained in Reference Example 2 was employed to determine saturated amount of adsorption before and after the recovering process. The results were shown in Table 2.

Table 2

| Solution for recovering (aqueous NaCl solution) (mole/ℓ) | Saturated amount of adsorption of cholesterol per 1 mℓ of gel (mg) | |
| --- | --- | --- |
| | Before recovering | After recovering |
| 0.15 | 14.2 | 1.0 |
| 0.35 | 14.3 | 13.0 |
| 0.5 | 14.1 | 13.8 |
| 2.0 | 14.4 | 14.1 |
| 4.0 | 14.0 | 13.8 |

## Example 3

The procedures in Example 2 were repeated except that potassium chloride was employed in place of sodium chloride to determine the change of saturated amount of adsorption by the recovering process. The results were shown in Table 3.

### Table 3

| Solution for recovering (aqueous NaCl solution) (mole/ℓ) | Saturated amount of adsorption of cholesterol per 1 mℓ of gel (mg) | |
|---|---|---|
| | Before recovering | After recovering |
| 0.15 | 14.0 | 1.2 |
| 0.35 | 14.1 | 13.2 |
| 0.5 | 14.4 | 14.0 |
| 2.0 | 14.2 | 14.0 |
| 4.0 | 14.3 | 14.1 |

0187670

WHAT WE CLAIM IS:

1. A process for recovering the adsorption capacity of the adsorbent for use in extracorporeal circulation treatment, wherein polyanion compound is immobilized on a water-insoluble support, characterized by that the adsorbent after adsorption is washed with an aqueous electrolytic solution with a concentration of 0.18 to 6 mole/ℓ.

2. The process as defined in Claim 1, wherein the concentration of the aqueous electrolytic solution is 0.3 to 2 mole/ℓ.

3. The process as defined in Claim 1, wherein the aqueous electrolytic soltion is an aqueous NaCl solution.